# EUROPEAN PATENT SPECIFICATION

(11) **EP 3 597 342 B1**
(45) Date of publication and mention of the grant of the patent: **17.08.2022**
(21) Application number: 18768083.0
(22) Date of filing: 13.03.2018
(51) Int. Cl.: B23K 9/04, B33Y 10/00, B33Y 30/00, B33Y 50/02, B22F 3/105, B23K 26/342, B23K 15/00

(54) **MANUFACTURING METHOD, MANUFACTURING SYSTEM, AND MANUFACTURING PROGRAM FOR ADDITIVE MANUFACTURED OBJECT**
HERSTELLUNGSVERFAHREN, HERSTELLUNGSSYSTEM UND HERSTELLUNGSPROGRAMM FÜR GENERATIV GEFERTIGTES OBJEKT
PROCÉDÉ DE FABRICATION, SYSTÈME DE FABRICATION ET PROGRAMME DE FABRICATION D'OBJET FABRIQUÉ PAR ADDITIF

(30) Priority: 13.03.2017 JP 2017047553
(43) Date of publication of application: 22.01.2020
(73) Proprietor: Kabushiki Kaisha Kobe Seiko Sho (Kobe Steel, Ltd.), Kobe-shi, Hyogo 651-8585 (JP)
(72) Inventor: YAMASAKI, Takemasa, Hyogo 651-2271 (JP); SATO, Shinji, Hyogo 651-2271 (JP); YAMADA, Takeshi, Hyogo 651-2271 (JP)
(74) Representative: Müller-Boré & Partner Patentanwälte PartG mbB
(86) International application number: PCT/JP2018/009819
(87) International publication number: WO 2018/168881

(56) References cited:
- WO-A1-2016/143137
- CN-A- 103 374 721
- JP-A- H05 192 767
- JP-A- 2004 230 431
- JP-U- 3 208 808
- US-A1- 2004 228 754
- US-A1- 2015 108 096

## Description

### TECHNICAL FIELD

The present invention relates to a method, a system, and a program for manufacturing a laminate-molded object according to the preamble of claims 1, 3 and 4 respectively (see for example US 2015 108096 A1).

### BACKGROUND ART

In recent years, the need for 3D printers as means of production has been increasing, and in particular, application to metal materials is being researched and developed for practical use in the aircraft industry and the like. In a 3D printer using a metal material, a metal powder or metal wire is melted using a heat source such as a laser or an arc and molten metals are laminated to form a shaped object.

In related arts, a technique which manufactures a metal mold using a welding bead is known as a technique which laminates a molten metal and forms a shaped object (for example, see Patent Document 1). Patent Document 1 describes a method of manufacturing a mold including a step of generating shape data representing the shape of a mold, a step of dividing the mold into laminate bodies along contour lines based on the generated shape data, and a step of creating a movement path of a welding torch to supply a filler material based on the obtained shape data of the laminate bodies.

### CITATION LIST

### PATENT DOCUMENT

Patent Document 1: Japanese Patent No. 3784539

### SUMMARY OF THE INVENTION

### PROBLEMS THAT THE INVENTION IS TO SOLVE

In the technique of laminating a molten metal to form a shaped object, not only a melt bead is laminated in a vertical direction, but also in a case of making a complicated shape, it is necessary to be laminated in the horizontal direction. In this case, the height and shape of a next layer are estimated to determine a bead lamination position and the melt bead is laminated.

However, in the actual layering, an error occurs between an actual bead lamination position and a planned bead lamination position under the influence of the estimation error and the shape of a portion to be laminated, so that correction is required. When there is an error with the planned bead lamination position, the shape of the next layer will be different from the estimated shape. Therefore, as the layers are laminated, the deviation increases, and as a result, there is a risk that the shaped object cannot be formed with the target accuracy.

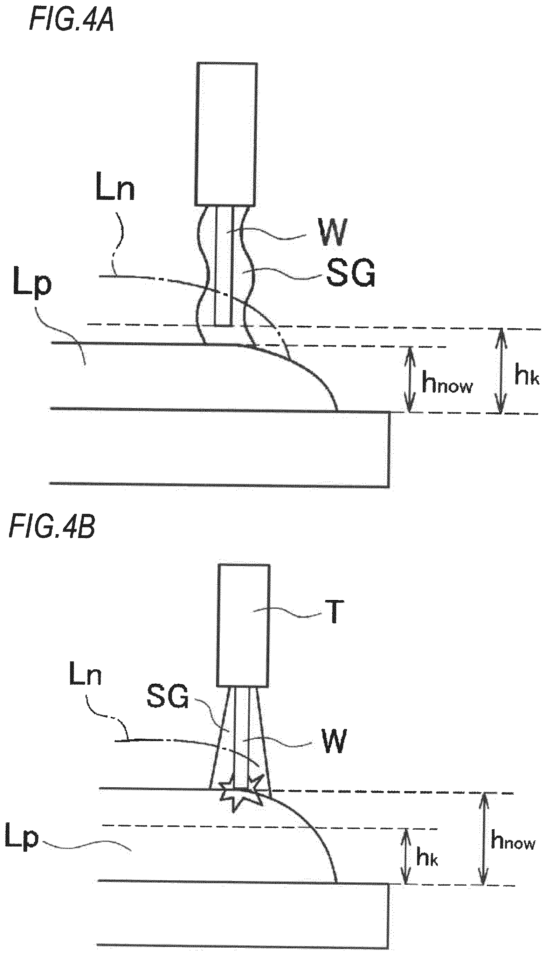

For example, when laminating melt beads by arc welding using an automatic machine such as a robot, as illustrated in Figs. 4A and 4B, there is a possibility that an actual height h_{now} of the melt bead may be different from a planned height hₖ of the melt bead. In this case, as illustrated in Fig. 4A, when welding a bead Lₙ of the next layer to a bead Lₚ of a front layer, the shielding properties of shield gas SG may become unstable and this may affect the quality of the shaped object. As illustrated in Fig. 4B, if the actual height h_{now} of the melt bead is higher than the planned height hₖ of the melt bead, when welding the bead Lₙ of the next layer, the bead Lₚ of the front layer interferes with an arc welding torch T or the filler material W and this adversely affects the quality of the shaped object and causes problems such as stopping the automatic machine and damage to the torch.

On the other hand, in a method of manufacturing a mold described in Patent Document 1, there is room for improvement because error correction of the lamination height and height correction of a melt bead of each layer are not considered.

The invention is made in view of the problems described above and an object thereof is to provide a method, a system, and a program for manufacturing a laminate-molded object which can appropriately control the height of a melt bead of each layer to improve the quality of a shaped object and prevent interference between the melt bead and a laminating device.

### MEANS FOR SOLVING THE PROBLEMS

A method of, a system for and a program for manufacturing a laminate-molded object according to the present invention are defined in claims 1, 3 and 4 respectively. Further embodiment of the present invention is defined in the dependent claim. 2.

### ADVANTAGES OF THE INVENTION

According to a method, a system, and a program for manufacturing a laminate-molded object of the invention, at the time of laminate molding, the height of a melt bead in each layer can be made as planned, and as a result, error with a previously planned molten metal lamination position can be suppressed to secure modeling accuracy. Further, since a distance between a welding torch and a laminated metal will be appropriate during molding, shielding properties by shield gas can be secured, which not only leads to quality assurance but also prevents damage due to collision with a laminating device such as a welding torch.

### BRIEF DESCRIPTION OF THE DRAWINGS

Fig. 1 is an external view of a system for manufacturing a laminate-molded object according to the invention.
Fig. 2 is a flow chart of a program illustrating a procedure for forming the laminate-molded object.
Fig. 3 is a view schematically illustrating a procedure for forming the laminate-molded object.
Fig. 4A is a view schematically illustrating a case where a bead of a next layer is formed when an actual bead lamination position is lower than a planned bead lamination position.
Fig. 4B is a view schematically illustrating a case where the bead of the next layer is formed when the actual bead lamination position is higher than the planned bead lamination position.

### MODES FOR CARRYING OUT THE INVENTION

Hereinafter, an embodiment of a manufacturing method and a manufacturing system of a laminate-molded object according to the invention will be described in detail based on the drawings. The following embodiment is merely specific examples of the invention and do not limit the technical scope of the invention.

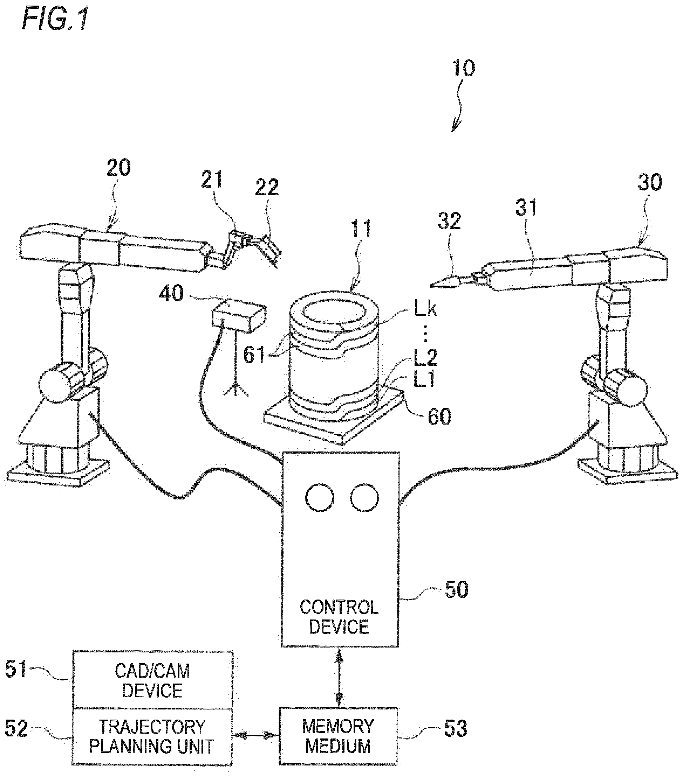

As illustrated in Fig. 1, a laminate-molded object manufacturing system 10 according to the embodiment includes a welding robot 20, a cutting robot 30, a height measuring device 40, a control device 50, a CAD/CAM device 51, a trajectory planning unit 52, and a memory 53. That is, in the embodiment, the existing welding robot 20 is used as the laminating device of the invention and the existing cutting robot 30 is used as the cutting device of the invention.

The laminate-molded object manufacturing system 10 moves a welding torch 22 based on layer shape data representing the shapes of layers L1 to Lk of a laminate-molded object 11 and laminates melt beads 61 over the plurality of layers L1 to Lk while melting a filler material (wire) W by the welding robot 20, in such a manner that the laminate-molded object manufacturing system 10 forms the laminate-molded object 11.

In Fig. 1, a case where a substantially cylindrical shape is formed by continuously laminating the melt beads 61 helically (that is, an end portion of the melt bead 61 of a front layer and a start portion of the melt bead 61 of a next layer are continuous) is illustrated as an example of the laminate-molded object 11. However, the laminate-molded object 11 can be set to any shape.

The welding robot 20 is an articulated robot and includes the welding torch 22 at the tip portion of a tip arm 21. The tip arm 21 is movable in three dimensions, and by controlling the attitude and position of the tip arm 21 with the control device 50, the welding torch 22 can be moved to any position in any attitude.

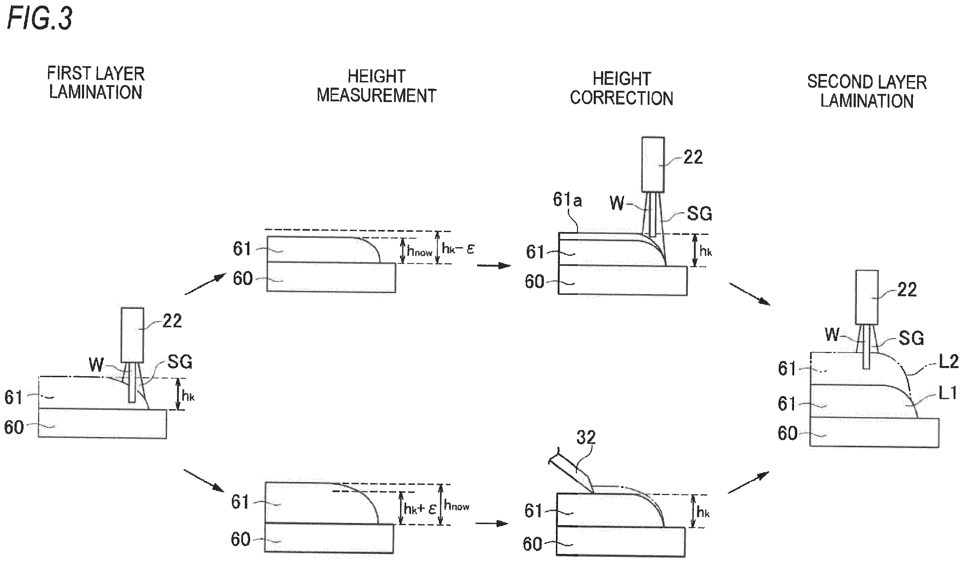

The welding torch 22 includes a substantially cylindrical shield nozzle to which shield gas SG (see Fig. 3) is supplied, a contact tip (not illustrated) disposed inside the shield nozzle, and a filler material W which is held by the contact tip and supplied with a melting current. While supplying the filler material W, the welding torch 22 generates an arc while flowing the shield gas SG, in such a manner that the welding torch 22 melts and solidifies the filler material W and laminates the melt beads 61 on a base 60 to form the laminate-molded object 11. The welding torch 22 may be a non-fusible electrode type that supplies a filler material from the outside.

The cutting robot 30 is an articulated robot as similar to the welding robot 20 and is provided with a metal processing tool 32 such as an end mill or a grinding wheel at the tip portion of the tip arm 31. Thus, the cutting robot 30 can be moved three-dimensionally by the control device 50 so that the machining posture thereof can take any posture.

The cutting robot 30 processes the melt bead 61 formed by the welding robot 20 to the desired height with metal processing tool 32, if necessary.

The height measuring device 40 is a device for measuring a height h_{now} of the melt bead 61 and any height measuring device such as a contact type or a non-contact type can be used. However, the melt bead 61 immediately after formation is at a high temperature, it is preferable to use a non-contact-type measuring device such as a laser type or an imaging type. The height measuring device 40 measures the height h_{now} of the melt bead 61 every time one layer of the melt bead 61 is formed.

The CAD/CAM device 51 creates shape data of the laminate-molded object 11 to be formed, and then divides it into a plurality of layers to generate layer shape data representing the shapes of the respective layers L1 to Lk. The trajectory planning unit 52 generates a moving trajectory of the welding torch 22 based on the layer shape data. The memory 53 stores the generated layer shape data, the movement trajectory of the welding torch 22, and the like.

The control device 50 controls the welding robot 20 based on the layer shape data and the movement trajectory of the welding torch 22, which are stored in the memory 53, by executing the manufacturing program stored inside and controls the movement of the welding robot 20 and the cutting robot 30 according to the state of the melt bead 61 in each layer, as described below.

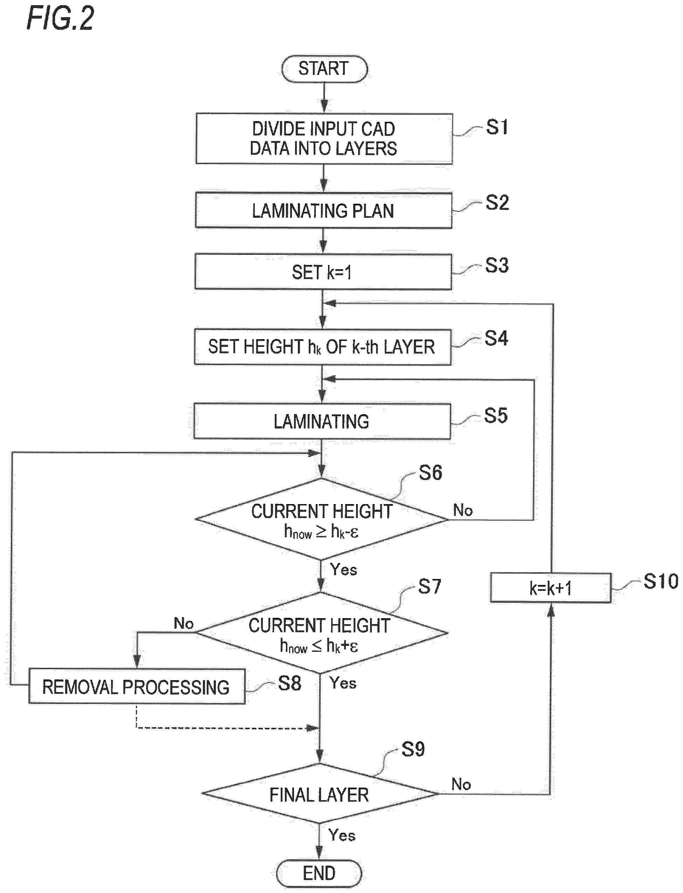

Next, with reference to Figs. 2 and 3, a specific procedure of forming the laminate-molded object 11 using the laminate-molded object manufacturing system 10 of the embodiment will be described in detail.

As illustrated in the flow chart of Fig. 2, first, the shape data representing the shape of the laminate-molded object 11 is created by the CAD/CAM device 51 and the CAD/CAM device 51 divides the input shape data (CAD data) into a plurality of layers L1 to Lk and generates the layer shape data representing the shapes of the respective layers L1 to Lk (Step S1). The layer shape data representing the shapes of the respective layer L1 to Lk becomes the movement trajectory of the welding torch 22, that is, the lamination trajectory of the melt bead 61.

It is preferable to divide the shape data of the laminate-molded object 11 into the plurality of layers in a direction substantially perpendicular to a laminating direction of the melt beads 61. That is, when the melt beads 61 are vertically laminated to form the laminate-molded object 11, it is divided horizontally, and when the melt beads 61 are horizontally laminated to form the laminate-molded object 11, it is divided vertically. In the following description, a case where the melt beads 61 are vertically laminated to form the laminate-molded object 11 will be described.

Next, based on the layer shape data, the trajectory planning unit 52 creates a specific melt-bead-61 laminating plan such as the movement trajectory of the welding torch 22 in each of the layers L1 to Lk and a planned height hₖ of the melt bead 61 in which the melt beads 61 of the respective layers L1 to Lk are laminated (Step S2).

Then, the numerical value of the counter included in the control device 50 is set to k=1 (Step S3) and the planned height hₖ of the melt bead 61 when the melt bead 61 of the first layer is laminated (formed) is set to hₗ (Step S4). In this case, the planned height hₖ is the total height of the laminated melt beads 61. The planned height of the melt bead 61 for each of the layers L1 to Lk may be the same or the height may be different for each layer according to the layer shape data of each of the layers L1 to Lk.

Then, as illustrated in Fig. 3, the welding torch 22 is moved along the planned movement trajectory and the melt bead 61 of the first layer is laminated on the base 60 (Step S5). Then, the height h_{now} of the melt bead 61 of the first layer is measured by the height measuring device 40. In addition, the measurement of the height h_{now} of the melt bead 61 is performed every time the melt bead 61 of each of the layers L1 to Lk is formed.

Next, it is compared whether the height h_{now} of the melt bead 61 measured is within the range of a tolerance ε with respect to the planned height hₖ. Specifically, it is determined whether the height h_{now} of the melt bead 61 measured is equal to or larger than a value obtained by subtracting the tolerance ε from the planned height hₖ (Step S6).

When, in Step S6, it is determined that the height h_{now} of the melt bead 61 is smaller than the value obtained by subtracting the tolerance ε from the planned height hₖ, the process returns to Step S5 and an additional melt bead 61a is further laminated on the melt bead 61 of the first layer, and further the height h_{now} of the melt bead 61 is measured again to compare with the planned height hₖ.

Thereby, the height h_{now} of the melt bead 61 is brought close to the planned height hₖ. As a result, the adverse effect on the quality of the laminate-molded object 11 due to the melt bead 61 of the next layer being laminated while the height h_{now} of the melt bead 61 is smaller than the planned height hₖ can be suppressed.

Then, when it is determined that the height h_{now} of the melt bead 61 is equal to or larger than a value obtained by subtracting the tolerance ε from the planned height hₖ, the process proceeds to the next step and it is determined whether the height h_{now} of the melt bead 61 is equal to or smaller than a value obtained by adding the tolerance ε to the planned height hₖ (Step S7).

When the height h_{now} of the melt bead 61 is larger than the value obtained by adding the tolerance ε to the planned height hₖ, cutting is performed by the metal processing tool 32 of the cutting robot 30 so that the height h_{now} of the melt bead 61 becomes the planned height hₖ (Step S8).

After cutting the melt bead 61 with the cutting robot 30, the process returns to Step S6 and the height h_{now} of the melt bead 61 after cutting is measured again by the height measuring device 40 and compared with the planned height hₖ. Further, when cutting of the melt bead 61 ensures that the height h_{now} of the melt bead 61 is within the range of the tolerance ε with respect to the planned height hₖ, as indicated by the broken line in Fig. 2, the process may proceed to Step S9 of determining whether the planned number of layers of melt beads 61 is laminated.

In a case where, in Step S7, the height h_{now} of the melt bead 61 is larger than the value obtained by adding the tolerance ε to the planned height hₖ, when the melt bead 61 of the next layer (the second layer) is laminated, the welding torch 22 or the filler material W may come in contact with the laminated melt bead 61 of the first layer, which may lead to stopping of the welding robot 20 or damage to the welding torch 22. However, this can be prevented by cutting the height h_{now} of the melt bead 61 to the planned height hₖ.

In a case where, in Step S7, the height h_{now} of the melt bead 61 is equal to or smaller than the value obtained by adding the tolerance ε to the planned height hₖ, it is determined that the height h_{now} of the melt bead 61 is within the range of the tolerance ε, and then it is determined whether the planned number of layers of the melt beads 61 is laminated (Step S9).

When, in step S9, it is determined that the lamination of the planned number of layers of the melt beads 61 is not completed, the value of the counter is incremented and set to k=2 (Step S10) and the process returns to Step S4. Then, the planned height hₖ is changed to a new planned height hₖ, which is the total height of the melt beads 61 of the first and second layers and the melt bead 61 of the next layer (second layer) is laminated on the melt bead 61 of the first layer.

Then, similarly, lamination of the melt bead 61 is repeatedly performed until lamination of the planned number of layers of the melt beads 61 is completed, in such a manner that the laminate-molded object 11 is formed.

When it is determined in Step S9 that lamination of the planned number of layers of the melt beads 61 is complete, the creation program for the laminate-molded object 11 is finished.

As described above, according to the method and system for manufacturing laminate-molded object of the embodiment, shape data representing the shape of laminate-molded object 11 is acquired and the layer shape data representing the shape of each of the layers L1 to Lk is generated by dividing the laminate-molded object 11 into the plurality of layers L1 to Lk based on the shape data. Then, the welding robot 20 forms the laminate-molded object 11 by laminating the melt beads 61 of respective layers L1 to Lk. The formation of the melt bead 61 of each of the layers L1 to Lk includes a step of forming the melt bead 61 by the welding robot 20 based on the layer shape data of each of the layers L1 to Lk, a step of measuring the height h_{now} of the formed melt bead 61 by the height measuring device 40, a step of forming another melt bead 61a over the melt bead 61 with the welding robot 20 when, comparing the height h_{now} of the measured melt bead 61 to the planned height hₖ within the range of the tolerances ε, the height h_{now} of the melt bead 61 is lower than the value obtained by subtracting the tolerance ε from the planned height hₖ, and a step of removing the melt bead 61 with the cutting robot 30 when the height h_{now} of the melt bead 61 is higher than the value obtained by adding the tolerance ε to the planned height hₖ. Therefore, it becomes possible to make the height h_{now} in each of the layers L1 to Lk within the range of the tolerance ε with respect to the planned height hₖ at the time of laminate molding, and as a result, it is possible to form the laminate-molded object 11 with high accuracy by suppressing an error with a previously planned molten metal lamination position.

Since the distance between the welding torch 22 and the melt bead 61 is appropriate during molding, shielding properties by the shield gas can be secured. Therefore, not only does it lead to quality security, but it will also prevent stoppage and damage due to collisions of the welding torch 22 or the filler material W with the melt bead 61.

Further, the comparison between the height h_{now} of the melt bead 61 measured by the height measuring device 40 and the planned height hₖ is performed again after laminating the additional melt bead 61a or after cutting the melt bead 61 with the cutting robot 30, the laminate-molded object 11 can be formed with higher accuracy.

Further, according to the program for manufacturing the laminate-molded object of the embodiment, the welding robot 20 performs the procedure of forming the laminate-molded object 11 by laminating and forming the melt bead 61 of each of the layers L1 to Lk. In addition, the formation of the melt bead 61 of each of the layers L1 to Lk executes a procedure of forming the melt bead 61 by the welding robot 20 based on the layer shape data of each of the layers L1 to Lk, a procedure of measuring the height h_{now} of the formed melt bead 61 by the height measuring device 40, a procedure of forming another melt bead 61a over the melt bead 61 with the welding robot 20 when, comparing the height h_{now} of the measured melt bead 61 to the planned height hₖ within the range of the tolerances ε, the height h_{now} of the melt bead 61 is lower than the value obtained by subtracting the tolerance ε from the planned height hₖ, and a procedure of removing the melt bead 61 with the cutting robot 30 when the height h_{now} of the melt bead 61 is higher than the value obtained by adding the tolerance ε to the planned height hₖ. Therefore, it becomes possible to make the height h_{now} in each of the layers L1 to Lk within the range of the tolerance ε with respect to the planned height hₖ at the time of laminate molding, and as a result, it is possible to form the laminate-molded object 11 with high accuracy by suppressing an error with a previously planned molten metal lamination position.

In Step S6, when laminating another melt bead 61a, a different filler material W and a different welding torch may also be used to laminate another melt bead 61a of appropriate height according to the lamination error, with different welding conditions. Alternatively, another melt bead 61a may be laminated under the same conditions as those of the melt bead 61 in anticipation of the cutting process in Step S8 in advance.

The invention is not limited to the embodiment described above and appropriate modifications, improvements, and the like can be made.

For example, in the embodiment described above, an example in which arc welding is applied as the melt lamination method is described. However, a laminating device by other metal molding lamination method, for example, a molding lamination method by laser such as Selective Laser Melting (SLM) or Laser Metal Deposition (LMD), electron beam welding, or the like are also applicable.

### DESCRIPTION OF REFERENCE NUMERALS AND SIGNS

- 10: laminate-molded object manufacturing system
- 11: laminate-molded object
- 20: welding robot (laminating device)
- 30: cutting robot (cutting device)
- 40: height measuring device
- 50: control device
- 61: melt bead
- 61a: another melt bead
- L1 to Lk: layers
- ε: tolerance
- h_{now}: height of a melt bead
- hₖ: planned height of a melt bead (planned height)

## Claims

1. A method of manufacturing a laminate-molded object, comprising:
acquiring shape data representing the shape of a shaped object;
dividing the shaped object into a plurality of parallel layers based on the shape data and generating layer shape data representing the shape of each layer; and
providing a control device;
the method being **characterized by** achieving the following steps under the control of the control device:
forming a melt bead of each layer and laminating the melt bead until the shape of the shaped object is formed, wherein
the formation of the melt bead of each layer includes:
forming the melt bead by a laminating device based on the layer shape data of each layer;
measuring the height of the formed melt bead;
comparing whether the measured height of the melt bead is within a range of a tolerance with respect to a planned height;
forming another melt bead over the melt bead when the height of the melt bead is lower than a value obtained by subtracting the tolerance with respect to the planned height; and
removing the melt bead when the height of the melt bead is higher than a value obtained by adding the tolerance to the planned height, wherein
the forming of the melt bead and the removing of the melt bead are performed by an articulated welding robot and an articulated cutting robot, respectively.

2. The method according to claim 1, wherein
the measuring and the comparing are performed again after the another melt bead forming or the melt bead removing is performed.

3. A system for manufacturing a laminate-molded object, comprising:
a laminating device comprising an articulated robot for forming melt beads of a plurality of layers based on layer shape data representing the shape of the layers, in which a shaped object is divided into the plurality of layers parallel to each other;
and being **characterized by**:
a cutting device comprising an articulated robot for cutting the melt bead formed by the laminating device;
a height measuring device for measuring the height of the formed melt bead; and
a control device which controls the laminating device to form the melt bead of the plurality of layers based on the layer shape data of each layer, controls the laminating device to form another melt bead over the melt bead when the height of the melt bead measured by the height measuring device for each formation of the melt bead of each layer is lower than a value obtained by subtracting a tolerance from a planned height, and controls the cutting device to remove the melt bead when the height of the melt bead is higher than a value obtained by adding the tolerance to the planned height.

4. A program for manufacturing a laminate-molded object, causing a computer to execute a process when installed in the device of claim 3, the process being **characterized by** comprising:
forming a melt bead of each layer by controlling an articulated welding robot and using layer shape data representing the shape of each layer, in which the shape object is divided into a plurality of layers based on shape data representing the shape of the shape object, and performing a procedure of laminating the melt bead until the shape of the shaped object is formed, wherein
the formation of the melt bead of each layer includes:
forming the melt bead by a laminating device based on the layer shape data of each layer;
measuring the height of the formed melt bead;
comparing whether the measured height of the melt bead is within a range of a tolerance with respect to a planned height;
forming another melt bead over the melt bead when the height of the melt bead is lower than a value obtained by subtracting the tolerance from the planned height; and
removing the melt bead by controlling an articulated cutting robot, when the height of the melt bead is higher than a value obtained by adding the tolerance to the planned height.

## Patentansprüche

1. Verfahren zur Herstellung eines Laminat-Formgegenstands, umfassend:
Erfassen von Formdaten, welche die Form eines geformten Gegenstands darstellen;
Teilen des geformten Gegenstands in eine Mehrzahl von parallelen Schichten auf Grundlage der Formdaten und Erzeugen von Schichtformdaten, welche die Form jeder Schicht darstellen; und
Bereitstellen einer Steuervorrichtung;
wobei das Verfahren **dadurch gekennzeichnet ist, dass** die folgenden Schritte unter der Steuerung der Steuervorrichtung erfolgen:
Bilden eines Schweißwulsts jeder Schicht und Laminieren des Schweißwulsts, bis die Form des geformten Gegenstands gebildet ist, wobei
die Bildung des Schweißwulsts jeder Schicht beinhaltet:
Bilden des Schweißwulsts durch eine Laminiervorrichtung auf Grundlage der Schichtformdaten jeder Schicht;
Messen der Höhe des gebildeten Schweißwulsts;
Vergleichen, ob die gemessene Höhe des Schweißwulsts innerhalb eines Toleranzbereichs in Bezug auf eine geplante Höhe liegt;
Bilden eines weiteren Schweißwulsts über dem Schweißwulst, wenn die Höhe des Schweißwulsts niedriger als ein Wert ist, der durch Subtrahieren der Toleranz in Bezug auf die geplante Höhe erhalten wird; und
Entfernen des Schweißwulsts, wenn die Höhe des Schweißwulsts größer als ein Wert ist, der durch Addieren der Toleranz zu der geplanten Höhe erhalten wird, wobei
das Bilden des Schweißwulsts und das Entfernen des Schweißwulsts von einem Schweißgelenkarmroboter bzw. einem Schneidgelenkarmroboter durchgeführt werden.

2. Verfahren nach Anspruch 1, wobei das Messen und das Vergleichen noch einmal durchgeführt werden, nachdem das Bilden des weiteren Schweißwulsts oder das Entfernen des Schweißwulsts durchgeführt wurde.

3. System zur Herstellung eines Laminat-Formgegenstands, umfassend:
eine Laminiervorrichtung, umfassend einen Gelenkarmroboter zum Bilden von Schweißwülsten einer Mehrzahl von Schichten auf Grundlage der die Form der Schichten darstellenden Schichtformdaten, in welchen ein geformter Gegenstand in eine Mehrzahl zueinander parallelen Schichten geteilt ist;
und **gekennzeichnet ist durch**:
eine Schneidvorrichtung, umfassend einen Gelenkarmroboter zum Schneiden des **durch** die Laminiervorrichtung gebildeten Schweißwulsts;
eine Höhenmessvorrichtung zum Messen der Höhe des gebildeten Schweißwulsts; und
eine Steuervorrichtung, welche die Laminiervorrichtung steuert, um den Schweißwulst der Mehrzahl von Schichten auf Grundlage der Schichtformdaten jeder Schicht zu bilden, die Laminiervorrichtung steuert, um einen weiteren Schweißwulst über dem Schweißwulst zu bilden, wenn die von der Höhenmessvorrichtung gemessene Höhe des Schweißwulsts für jede Bildung des Schweißwulsts jeder Schicht niedriger als ein Wert ist, der **durch** Subtrahieren einer Toleranz von einer geplante Höhe erhalten wird, und die Schneidvorrichtung steuert, um den Schweißwulst zu entfernen, wenn die Höhe des Schweißwulsts größer als ein Wert ist, der **durch** Addieren der Toleranz zu der geplanten Höhe erhalten wird.

4. Programm zur Herstellung eines Laminat-Formgegenstands, das einen Computer veranlasst einen Prozess auszuführen, wenn es in der Vorrichtung nach Anspruch 3 installiert ist, wobei der Prozess **dadurch gekennzeichnet ist, dass** er umfasst:
Bilden eines Schweißwulsts jeder Schicht durch Steuern eines Gelenkarmroboters und Verwenden von die Form jeder Schicht darstellenden Schichtformdaten, in welchen der geformte Gegenstand in eine Mehrzahl von Schichten auf Grundlage der die Form des geformten Gegenstands darstellenden Formdaten geteilt ist, und Ausführen eines Prozesses des Laminierens des Schweißwulsts, bis die Form des geformten Gegenstands gebildet ist, wobei
die Bildung des Schweißwulsts jeder Schicht beinhaltet:
Bilden des Schweißwulsts durch eine Laminiervorrichtung auf Grundlage der Schichtformdaten jeder Schicht;
Messen der Höhe des gebildeten Schweißwulsts;
Vergleichen, ob die gemessene Höhe des Schweißwulsts innerhalb eines Toleranzbereichs in Bezug auf eine geplante Höhe liegt;
Bilden eines weiteren Schweißwulsts über dem Schweißwulst, wenn die Höhe des Schweißwulsts niedriger als ein Wert ist, der durch Subtrahieren der Toleranz von der geplanten Höhe erhalten wird; und
Entfernen des Schweißwulsts durch Steuern eines Schneidgelenkarmroboters, wenn die Höhe des Schweißwulsts größer als ein Wert ist, der durch Addieren der Toleranz zu der geplanten Höhe erhalten wird.

## Revendications

1. Procédé de fabrication d'un objet moulé par stratification, comprenant :
l'acquisition de données de forme représentant la forme d'un objet mis en forme ;
la division de l'objet mis en forme en une pluralité de couches parallèles se basant sur les données de forme et la génération de données de forme en couches représentant la forme de chaque couche ; et
la mise à disposition d'un dispositif de commande ;
le procédé étant **caractérisé par** la réalisation des étapes suivantes sous le contrôle du dispositif de commande :
la formation d'un cordon fondu de chaque couche et la stratification du cordon fondu jusqu'à ce que la forme de l'objet mis en forme soit réalisée, dans lequel la formation du cordon fondu de chaque couche comprend :
la formation du cordon fondu par un dispositif de stratification se basant sur les données de forme en couches de chaque couche ;
la mesure de la hauteur du cordon fondu formé ;
une comparaison pour savoir si la hauteur mesurée du cordon fondu se trouve dans une plage de tolérance par rapport à une hauteur planifiée ;
la formation d'un autre cordon fondu par dessus le cordon fondu quand la hauteur du cordon fondu est inférieure à une valeur obtenue par soustraction de la tolérance à la hauteur planifiée ; et
l'élimination du cordon fondu quand la hauteur du cordon fondu est supérieure à une valeur obtenue par addition de la tolérance à la hauteur planifiée, dans lequel la formation du cordon fondu et l'élimination du cordon fondu sont respectivement réalisées par un robot de soudage articulé et un robot de coupe articulé.

2. Procédé selon la revendication 1, dans lequel
la mesure et la comparaison sont une nouvelle fois réalisées après réalisation de l'autre formation du cordon fondu ou élimination du cordon fondu.

3. Système de fabrication d'un objet moulé par stratification, comprenant :
un dispositif de stratification comprenant un robot articulé pour former des cordons fondus d'une pluralité de couches se basant sur des données de forme en couches représentant la forme des couches, dans lequel un objet mis en forme est divisé en une pluralité de couches parallèles l'une à l'autre ;
et étant **caractérisé par** :
un dispositif de coupe comprenant un robot articulé pour couper le cordon fondu formé par le dispositif de stratification ;
un dispositif de mesure de la hauteur pour mesurer la hauteur du cordon fondu formé ; et
un dispositif de commande qui commande au dispositif de stratification de former le cordon fondu de la pluralité de couches se basant sur les données de mise en forme en couches de chaque couche, commande au dispositif de stratification de former un autre cordon fondu par dessus le cordon fondu quand la hauteur du cordon fondu mesurée par le dispositif de mesure de la hauteur pour chaque formation du cordon fondu de chaque couche, est inférieure à une valeur obtenue par soustraction d'une tolérance à une hauteur planifiée, et commande au dispositif de coupe l'élimination du cordon fondu quand la hauteur du cordon fondu est supérieure à une valeur obtenue par addition de la tolérance à la hauteur planifiée.

4. Programme de fabrication d'un objet moulé par stratification, obligeant un ordinateur à exécuter un processus une fois installé dans le dispositif selon la revendication 3, le processus étant **caractérisé en ce qu'**il comprend :
la formation d'un cordon fondu de chaque couche par contrôle d'un robot de soudage articulé et par l'utilisation de données de mise en forme en couches représentant la forme de chaque couche, dans lequel l'objet à former est divisé en une pluralité de couches se basant sur les données de forme représentant la forme de l'objet à former, et la réalisation d'une procédure de stratification du cordon fondu jusqu'à ce que la forme de l'objet formé soit réalisée, dans lequel
la formation du cordon fondu de chaque couche comprend :
la formation du cordon fondu par un dispositif de stratification se basant sur les données de forme en couches de chaque couche ;
la mesure de la hauteur du cordon fondu formé ;
une comparaison pour savoir si la hauteur mesurée du cordon fondu se trouve dans une plage de tolérance par rapport à une hauteur planifiée ;
la formation d'un autre cordon fondu par dessus le cordon fondu quand la hauteur du cordon fondu est inférieure à une valeur obtenue par soustraction de la tolérance à la hauteur planifiée ; et
l'élimination du cordon fondu par le contrôle d'un robot de coupe articulé quand la hauteur du cordon fondu est supérieure à une valeur obtenue par addition de la tolérance à la hauteur planifiée.
